# EUROPÄISCHE PATENTSCHRIFT

(11) **EP 2 989 875 B1**
(45) Veröffentlichungstag und Bekanntmachung des Hinweises auf die Patenterteilung: **27.12.2017**
(21) Anmeldenummer: 15401089.6
(22) Anmeldetag: 20.08.2015
(51) Int. Cl.: A01B 73/02, A01B 73/06, A01M 7/00

(54) **GESTÄNGE EINES LANDWIRTSCHAFTLICHEN GERÄTES**
BOOM OF AN AGRICULTURAL DEVICE
RAMPE D'UN ENGIN AGRICOLE

(30) Priorität: 26.08.2014 DE 102014112163
(43) Veröffentlichungstag der Anmeldung: 02.03.2016
(73) Patentinhaber: Amazonen-Werke H. Dreyer GmbH & Co. KG, 49205 Hasbergen (DE)
(72) Erfinder: Austermann, Stefan, 48291 Telgte (DE)

(56) Entgegenhaltungen:
- EP-A1- 2 510 784
- EP-A2- 1 201 123

## Beschreibung

Die vorliegende Erfindung betrifft ein Gestänge eines landwirtschaftlichen Gerätes sowie ein Verfahren zum Ein- und/oder Ausklappen eines solchen Gestänges.

Ein Gestänge eines landwirtschaftlichen Gerätes ist beispielsweise aus der
EP 1 201 123 A2 bekannt. Bei diesem Verteilergestänge sind die Motoren, welche die einzelnen Gestängeabschnitte zueinander ein- und ausklappen, mit Sensorelementen versehen, die jeweils ein Endstellungssignal erzeugen. Erst wenn ein Motor seine Endstellung erreicht hat, wird eine Beaufschlagung des nächsten Motors zugelassen. Damit soll ein ordnungsgemäßes Ein- und Ausklappen der einzelnen Gestängeabschnitte des Verteilergestänges sichergestellt werden.

Die EP 2 510 784 B1 offenbart ein Verteilergestänge mit variabler Faltgeschwindigkeit. Aufgrund von Positionssignalen bezüglich der Stellung der zueinander einklappbaren Gestängeabschnitte wird die Klappgeschwindigkeit verändert. Insbesondere findet zu Beginn des Klappvorganges eine Beschleunigungsphase und zum Ende des Klappvorganges eine Verzögerungsphase statt.

Nachteilig ist bei bekannten Gestängen jedoch, dass das Ein- bzw. Ausklappen des Gestänges verhältnismäßig viel Zeit in Anspruch nimmt, da die Gestängeabschnitte zeitlich nacheinander bewegt werden.

Daher ist es Aufgabe der vorliegenden Erfindung, ein schnelleres und damit effizienteres Ein- und Ausklappen des Gestänges zu ermöglichen. Diese Aufgabe wird durch ein Gestänge gemäß Anspruch 1 sowie durch ein Verfahren gemäß Anspruch 7 gelöst. Vorteilhafte Weiterbildungen sind in den abhängigen Ansprüchen aufgeführt.

Die Aufgabe wird erfindungsgemäß also dadurch gelöst, dass eine oder mehrere Arbeitsstellungen des jeweiligen motorischen Stellelements zwischen den jeweiligen Endstellungen des Stellelements erfasst werden und ein zweites motorisches Stellelement zum Klappen eines zweiten Gestängeabschnittes bereits aktiviert wird, bevor ein erstes motorisches Stellelement zum Klappen eines ersten Gestängeabschnittes eine seiner Endstellungen erreicht hat.

In Folge dieser Maßnahmen findet das Ein- bzw. Ausklappen wenigstens zweier Gestängeabschnitte wenigstens teilweise gleichzeitig statt. Dadurch kann das Ein- bzw. Ausklappen des Gestänges beschleunigt und somit effizienter gestaltet werden.

Im Gegensatz zum Stand der Technik wird also nicht gewartet bis ein Gestängeabschitt vollständig ein- oder ausgeklappt wurde, bevor mit dem Klappen des nächsten Gestängeabschnittes begonnen wird. Stattdessen findet das Ein-oder Ausklappen des weiteren Gestängeabschnittes bereits statt, bevor der erste Gestängeabschnitt vollständig ein- bzw. ausgeklappt wurde, also während der erste Gestängeabschnitt noch bewegt wird.

Bei dem Gestänge kann es sich insbesondere um ein Verteilergestänge oder Spritzgestänge handeln, insbesondere einer landwirtschaftlichen Feldspritze. Bei der landwirtschaftlichen Feldspritze kann es sich um eine gezogene Feldspritze, eine Anbaufeldspritze oder um eine selbstfahrende Feldspritze handeln.

Das Gestänge kann einen mittleren Gestängeabschnitt und mehrere symmetrisch dazu angeordnete seitliche Gestängeabschnitte aufweisen. Der mittlere Gestängeabschnitt kann auch als Gestängetragrahmen bezeichnet werden.

Die Steuervorrichtung kann derart ausgebildet sein, dass das Klappen der an beiden Seiten des mittleren Gestängeabschnittes angeordneten Gestängeabschnitte synchron durchgeführt wird. Der erste Gestängeabschnitt und der zweite Gestängeabschnitt können insbesondere auf derselben Seite des mittleren Gestängeabschnittes angeordnet sein. Symmetrisch dazu können auf der anderen Seite des mittleren Gestängeabschnittes ein dritter und vierter Gestängeabschnitt angeordnet sein, die synchron zum ersten und zweiten Gestängeabschnitt geklappt werden.

Auf jeder Seite des mittleren Gestängeabschnittes können insbesondere zwei oder mehr Gestängeabschnitte angeordnet sein.

Die wenigstens zwei unterschiedlichen Klappstellungen der Gestängeabschnitte können insbesondere eine vollständig ausgeklappte und eine vollständig eingeklappte Stellung umfassen.

Wenn die seitlichen Gestängeabschnitte in ihrer vollständig ausgeklappten Klappstellung angeordnet sind, liegt das Gestänge in seiner Betriebsstellung vor. Sind hingegen die seitlichen Gestängeabschnitte in ihrer vollständig eingeklappten Stellung angeordnet, befindet sich das Gestänge in der sogenannten Transportstellung. In der Betriebsstellung kann sich das Gestänge insbesondere senkrecht zur Fahrtrichtung des das Gestänge tragenden Fahrzeugs erstrecken.

Die Messsignale der Sensorelemente können insbesondere proportional der Arbeitsstellung der jeweiligen motorischen Stellelemente sein bzw. basierend auf der Arbeitsstellung der jeweiligen motorischen Stellelemente bestimmt werden.

Die Steuervorrichtung kann insbesondere derart ausgebildet sein, dass sie das zweite motorische Stellelement aktiviert, wenn das erste motorische Stellelement eine vorherbestimmte Zwischenstellung erreicht hat. Als Zwischenstellung wird hierbei eine Arbeitsstellung des motorischen Stellelements zwischen den jeweiligen Endstellungen bezeichnet.

Die vorherbestimmte Zwischenstellung, bei welcher das zweite motorische Stellelement aktiviert wird, kann variabel einstellbar sein, insbesondere durch eine Bedienperson über den Bordcomputer des landwirtschaftlichen Gerätes. Dadurch kann die Geschwindigkeit des Ein- bzw. Ausklappens variiert werden.

Die vorherbestimmte Zwischenstellung kann insbesondere einer Arbeitsstellung entsprechen, bei der das erste motorische Stellelement wenigstens 50 %, insbesondere wenigstens 60 %, seiner zum Klappen des ersten Gestängeabschnittes erforderlichen Bewegung bereits ausgeführt hat. Dadurch kann ein zuverlässiges Klappen sichergestellt werden.

Die Sensorelemente können als Potentiometer, insbesondere als Linearpotenziometer, ausgebildet sein. Dadurch können die Sensorelemente einfach und robust ausgebildet sein.

Die Sensorelemente können insbesondere derart ausgebildet sein, dass sie eine oder mehrere Arbeitsstellungen des jeweiligen motorischen Stellelementes zwischen den jeweiligen Endstellungen des motorischen Stellelementes erfassen und entsprechende Messsignale an die Steuervorrichtung übermitteln. In den beiden Endstellungen oder Endlagen des jeweiligen motorischen Stellelementes können die Sensorelemente entsprechende Endlagensignale erfassen und an die Steuervorrichtung übermitteln.

Die motorischen Stellelemente können als Hydromotoren oder als elektrische Stellmotoren ausgebildet sein. Es können auch für manche Gestängeabschnitte Hydromotoren und für andere Gestängeabschnitte elektrische Stellmotoren vorgesehen sein. Die motorischen Stellelemente können auch als Pneumatikmotoren ausgebildet sein.

Wenn die motorischen Stellelemente als Hydromotoren ausgebildet sind, kann jedes motorische Stellelement insbesondere einen Hydraulikzylinder umfassen, insbesondere einen doppelwirkenden Hydraulikzylinder.

Sowohl im Fall von Hydromotoren als auch im Fall von elektrischen Stellmotoren können die motorischen Stellelemente je eine Kolbenstange aufweisen, welche mit dem zu klappenden Gestängeabschnitt verbunden ist. Dadurch kann die Bewegung der Kolbenstange auf den Gestängeabschnitt übertragen werden, sodass das Klappen des Gestängeabschittes durchgeführt wird.

Die Arbeitsstellung des jeweiligen motorischen Stellelements kann insbesondere der Position der Kolbenstange entsprechen. Die Position der Kolbenstange kann insbesondere bezogen auf die vollständig eingefahrene oder vollständig ausgefahrene Stellung der Kolbenstange bezogen werden.

Im Falle elektrischer Stellmotoren können die Sensorelemente jedoch auch beispielsweise als Drehgeber ausgebildet sein. In diesem Fall kann die Arbeitsstellung der Winkelposition eines Rotors oder einer Antriebswelle des elektrischen Stellmotors entsprechen. Die Drehposition kann beispielsweise dem zurückgelegten Drehwinkel bezüglich einer Anfangsposition entsprechen.

Die Sensorelemente können den motorischen Stellelementen insbesondere in integrierter Weise zugeordnet sein. Insbesondere können die Sensorelemente in einem Gehäuse der jeweiligen motorischen Stellelemente eingebaut sein. Dadurch sind die Sensorelemente vorteilhafterweise gegen äußere Einflüsse geschützt.

Die Erfindung stellt insbesondere auch ein Verfahren zum Ein- und/oder Ausklappen eines Gestänges eines landwirtschaftlichen Gerätes mit mehreren Gestängeabschnitten, die gelenkig miteinander verbunden und jeweils mittels eines zugehörigen motorischen Stellelements in zwei unterschiedliche Klappstellungen bringbar sind, bereit, umfassend die Schritte gemäß Patentanspruch 7.

Mit anderen Worten stellt die Erfindung also ein Verfahren zum Ein- und /oder Ausklappen eines oben beschriebenen Gestänges bereit. Das Gestänge, die motorischen Stellelemente sowie die zugordneten Sensorelemente können dabei eines oder mehrere der oben genannten Merkmale aufweisen.

Das zweite motorische Stellelement kann insbesondere dann aktiviert werden, wenn das erste motorische Stellelement eine vorherbestimmte Zwischenstellung erreicht hat. Die vorherbestimmte Zwischenstellung kann insbesondere einer Arbeitsstellung entsprechen, bei der das erste motorische Stellelement wenigstens 50 %, insbesondere wenigstens 60 %, seiner zum Klappen des ersten Gestängeabschnittes erforderlichen Bewegung bereits ausgeführt hat.

In einer alternativen Lösung der oben genannten Aufgabe stellt die Erfindung außerdem ein Gestänge nach Anspruch 8 und ein Verfahren nach Anspruch 9 bereit.

Gemäß dieser Alternative wird nicht die Arbeitsstellung der motorischen Stellelemente über entsprechende Sensorelemente erfasst, sondern die Klappstellung der Gestängeabschnitte. Auch diese alternative Lösung beruht jedoch auf der Idee, Gestängeabschnitte wenigstens zeitweise gleichzeitig zu klappen. Mit anderen Worten soll auch hier das Ein- bzw. Ausklappen eines zweiten Gestängeabschnittes veranlasst werden, bevor ein erster Gestängeabschnitt vollständig ein- bzw. ausgeklappt wurde.

Das Gestänge, die motorischen Stellelemente sowie die zugordneten Sensorelemente können dabei eines oder mehrere der oben genannten Merkmale aufweisen.

Die Sensorelemente können in diesem Fall jedoch insbesondere den Gelenken zwischen zwei zueinander klappbaren Gestängeabschnitten zugeordnet sein. Dabei können die Sensorelemente insbesondere als Drehpotentiometer ausgebildet sein.

Das zweite motorische Stellelement kann insbesondere dann aktiviert werden, wenn der erste Gestängeabschnitt eine vorherbestimmte Zwischenstellung erreicht hat. Die vorherbestimmte Zwischenstellung kann insbesondere einer Klappstellung entsprechen, bei der der erste Gestängeabschnitt wenigstens 50 %, insbesondere wenigstens 60 %, seiner zum vollständigen Ein- bzw. Ausklappen erforderlichen Bewegung bereits ausgeführt hat.

Die vorherbestimmte Zwischenstellung, bei welcher das zweite motorische Stellelement aktiviert wird, kann auch hier variabel einstellbar sein, insbesondere durch eine Bedienperson über den Bordcomputer des landwirtschaftlichen Gerätes.

Abschließend sei noch erwähnt, dass noch weitere Sensoren vorgesehen werden können, welche die Last der Stellelemente bestimmen, so dass bei Überlast auf ein Problem geschlossen und das Klappen gestoppt und/oder ein Alarm ausgegeben werden kann.

Weitere Merkmale und Vorteile der Erfindung werden nachfolgend anhand der beispielhaften Figuren erläutert. Dabei zeigt
- Fig. 1: eine als gezogene Feldspritze ausgebildete Verteilmaschine mit einem sich in Betriebsstellung befindlichen Gestänge in perspektivischer Ansicht und in Prinzipdarstellung,
- Fig. 2: die als gezogene Feldspritze ausgebildete Verteilmaschine mit dem in Transportstellung zusammengeklappten Gestänge in perspektivischer Ansicht und in Prinzipdarstellung,
- Fig. 3: zwei miteinander verbundene Gestängeabschnitte eines beispielhaften Gestänges in Betriebsstellung in einer Ansicht von oben,
- Fig. 4: die zwei Gestängeabschnitte der Fig. 3 in zusammengeklappten Zustand,
- Fig. 5a - 5d: eine Sequenz von Momentaufnahmen eines beispielhaften Gestänges beim Einklappen zweier Gestängeabschnitte in schematischer und stark vereinfachter Darstellung, und
- Fig. 6: zwei miteinander verbundene Gestängeabschnitte eines weiteren beispielhaften Gestänges in Betriebsstellung in einer Ansicht von hinten.

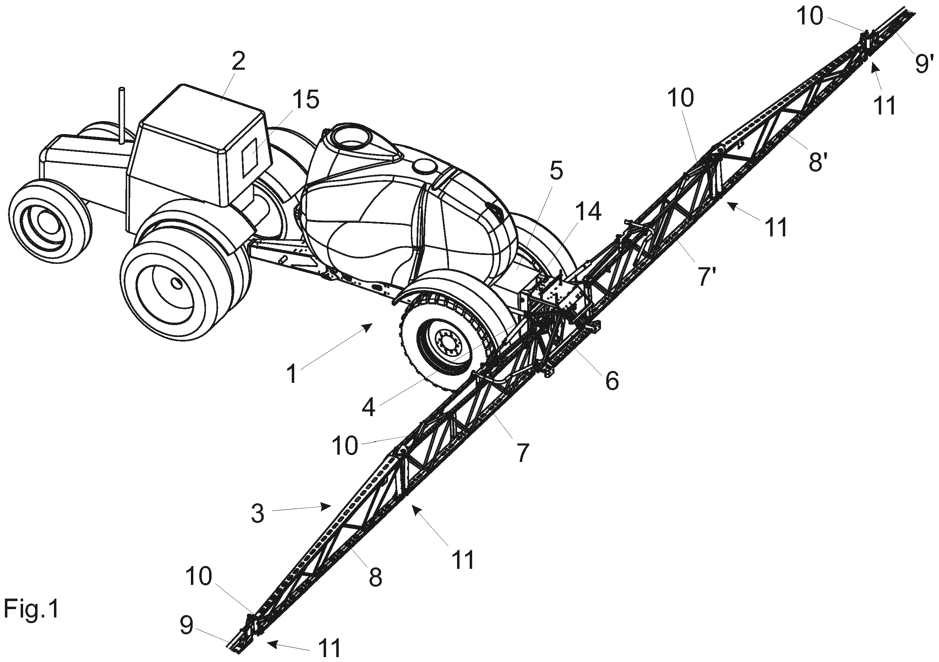

Fig. 1 zeigt ein als gezogene landwirtschaftliche Feldspritze 1 ausgebildetes landwirtschaftliches Gerät, welches über eine Anhängevorrichtung an einen Ackerschlepper 2 angekoppelt ist. Die Feldspritze 1 weist auf ihrer Rückseite ein Gestänge 3 auf, insbesondere ein Verteilergestänge, welches über eine Kuppeleinrichtung 4 an dem rückwärtigen Ende des Rahmens 5 der Feldspritze 1 in Höhenrichtung verstellbar angeordnet ist. Das Gestänge 3 besteht aus einem mittleren Gestängeabschnitt 6 und mehreren miteinander verbundenen Gestängeabschnitten 7, 7', 8, 8', 9, 9'. Der jeweilige innerste Gestängeabschnitt 7, 7' ist gelenkig an dem mittleren Gestängeabschnitt 6 angeordnet.

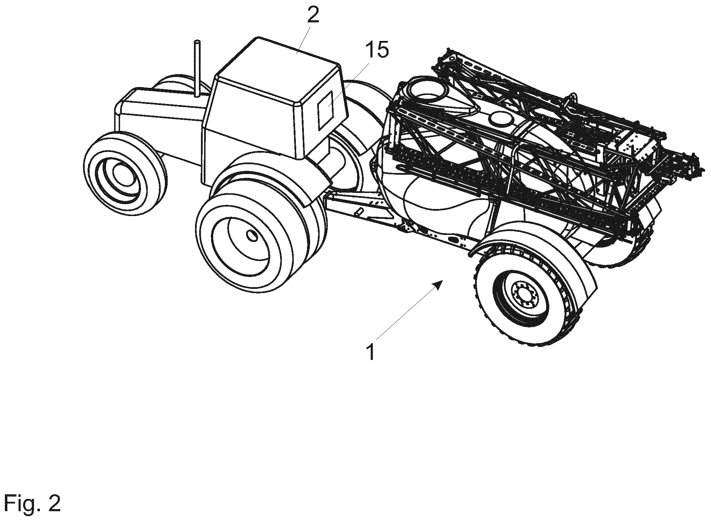

Zwischen den einzelnen zueinander klappbaren Gestängeabschnitten 7, 7', 8, 8', 9, 9' sowie zwischen dem jeweils innersten Gestängeabschnitt 7, 7' und dem mittleren Gestängeabschnitt 6 sind motorische Stellelemente 10 angeordnet, die hier als doppelwirkende Hydraulikzylinder ausgebildet sind. Diese Hydraulikzylinder 10 ermöglichen ein Verbringen der Gestängeabschnitte 7, 7', 8, 8', 9, 9' jeweils in eine erste, ausgeklappte Klappstellung, die der in Fig. 1 gezeigten Betriebsstellung entspricht, sowie in eine zweite, eingeklappte Klappstellung, die der Transportstellung gemäß Fig. 2 entspricht.

Die einzelnen aneinander anschließenden Gestängeabschnitte 7, 7', 8, 8', 9, 9' sind miteinander über Gelenke 11 verbunden, die insbesondere vertikal verlaufen.

Im Bereich der Hydraulikzylinder 10 sind in den Fig. 1 und 2 nicht gezeigte, als Potentiometer ausgebildete Sensorelemente angeordnet, welche zur Erfassung der Arbeitsstellung des jeweiligen Hydraulikzylinders 10 ausgebildet sind. Die Arbeitsstellung des Hydraulikzylinders 10 kann insbesondere der Position der Kolbenstange des Hydraulikzylinders entsprechen.

Über Datenleitungen, welche in den Fig. 1 und 2 nicht gezeigt sind, übermitteln die Sensorelemente die jeweiligen Messsignale an eine elektronische Steuervorrichtung 14, die mit einem auf dem Schlepper 2 angeordneten Bordcomputer 15 verbunden ist.

Die Messsignale der Sensorelemente können insbesondere proportional der Arbeitsstellung der jeweiligen motorischen Stellelemente sein bzw. basierend auf der Arbeitsstellung der jeweiligen motorischen Stellelemente bestimmt werden.

Die Sensorelemente erfassen neben den jeweiligen Endlagen der Hydraulikzylinder 10 auch eine oder mehrere Arbeitsstellungen zwischen den jeweiligen Endlagen. Die Endlagen der Hydraulikzylinder 10 entsprechen beispielsweise der vollständig eingefahrenen Position und der vollständig ausgefahrenen Position der Kolbenstange.

Die Arbeitsstellungen zwischen den jeweiligen Endlagen des Stellelements (Zwischenpositionen) werden kontinuierlich oder in zeitlicher Abfolge und/oder positionsabhängig, beispielsweise taktweise, an die elektronische Steuervorrichtung 14 übermittelt.

Die Steuervorrichtung 14, welche Hydraulikventile der doppelwirkenden Hydraulikzylinder 10 zu deren Betätigung ansteuert, ist derart ausgebildet, dass sie aufgrund der von den Sensorelementen übermittelten Messsignalen die motorischen Stellelemente ansteuert. Insbesondere ist sie derart ausgebildet, dass sie ein zweites motorisches Stellelement zum Klappen eines zweiten Gestängeabschnittes bereits aktiviert, bevor ein erstes motorisches Stellelement zum Klappen eines ersten Gestängeabschnittes eine seiner Endstellungen erreicht hat.

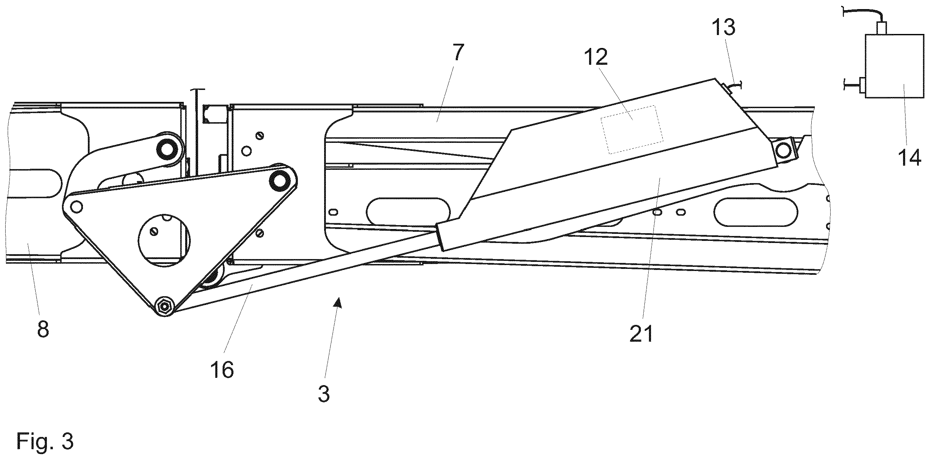

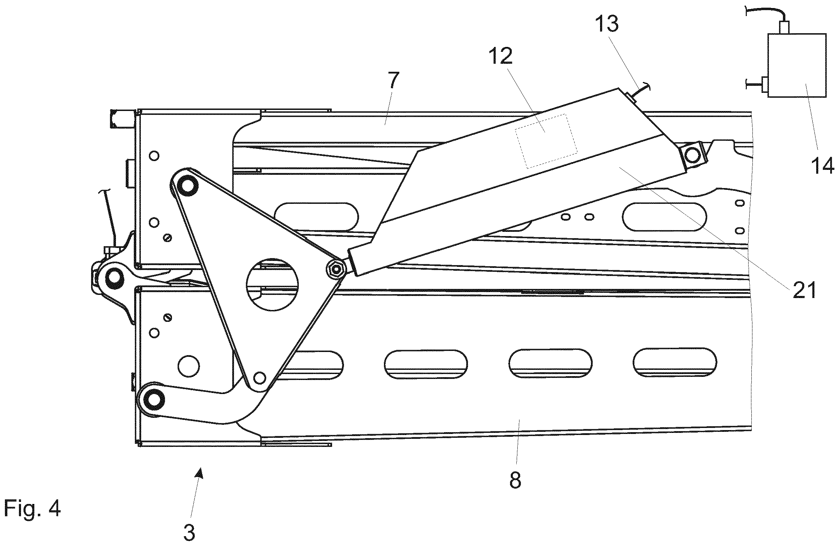

In Fig. 3 und 4 sind zwei beispielhafte Gestängeabschnitte 7, 8 gezeigt, und zwar einmal in ausgeklappter Position (Fig. 3) und einmal in eingeklappter Position (Fig. 4). Das zwischen den beiden Gestängeabschnitten angeordnete motorische Stellelement 21 ist in diesem Fall als elektrischer Stellmotor ausgebildet. Dem Stellmotor 21 ist ein Sensorelement 12 in integrierter Weise zugeordnet. Das nur schematisch angedeutete Sensorelement 12 ist im Inneren des Gehäuses des elektrischen Stellmotors 21 angeordnet.

Das Sensorelement 12 kann beispielsweise als Linearpotenziometer ausgebildet sein, mit welchem sich die Position oder Arbeitsstellung der Kolbenstange 16 bestimmen lässt. Ein entsprechendes Mess- oder Positionssignal wird dann über die Datenleitung 13 an die Steuervorrichtung 14 übermittelt, die basierend auf dem Messsignal das Klappen weiterer Gestängeabschnitte steuert.

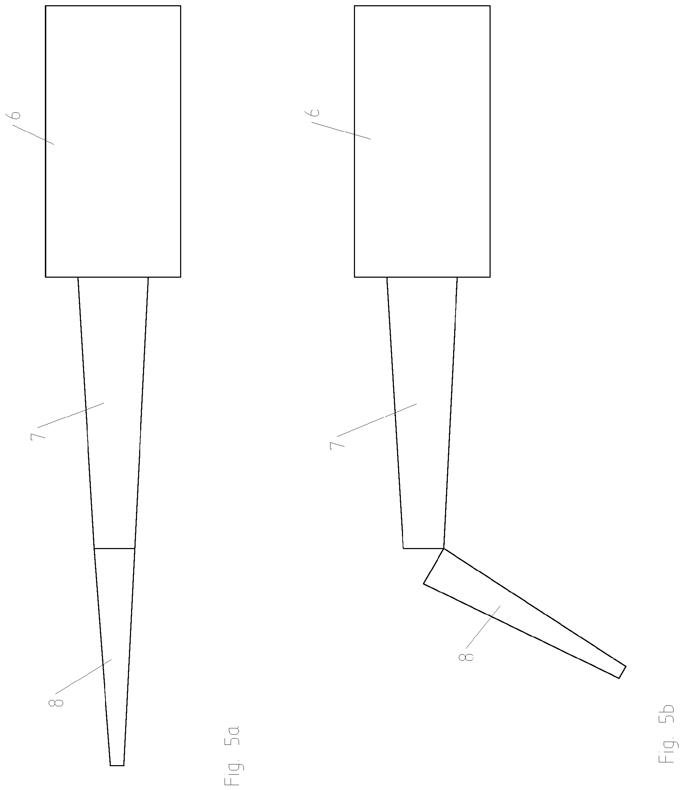

In den Fig. 5a bis 5d wird ein Einklappvorgang gemäß der vorliegenden Erfindung schematisch dargestellt. Die Fig. zeigen nur zwei klappbare Gestängeabschnitte 7, 8. Es können jedoch auch mehrere klappbare Gestängeabschnitte vorgesehen sein.

Außerdem zeigen die Fig. nur eine Seite eines Verteilgestänges. Das Gestänge kann zum mittleren Gestängeabschnitt 6 symmetrisch ausgebildet sein. Mit anderen Worten können sich auf der anderen Seite des mittleren Gestängeabschnittes 6 ebenfalls mehrere Gestängeabschnitte befinden, die in den Fig. nicht dargestellt sind. Das Klappen dieser nicht dargestellten Gestängeabschnitte kann synchron und analog zu dem Klappen der gezeigten Gestängeabschnitte 7, 8 durchgeführt werden.

In Fig. 5a befinden sich die Gestängeabschnitte 7, 8 in ihrer voll ausgeklappten Betriebsstellung. Der innerste Gestängeabschnitt 7 ist gelenkig an dem mittleren Gestängeabschnitt 6 angeordnet. Zwischen den Gestängeabschnitten 7 und 8 ist ein hier nicht gezeigtes motorisches Stellelement angeordnet, welches das Klappen des Gestängeabschnittes 8 in Bezug auf den Gestängeabschnitt 7 erlaubt. Zwischen dem mittleren Gestängeabschnitt 6 und dem inneren Gestängeabschnitt 7 ist ebenfalls ein hier nicht gezeigtes motorisches Stellelement angeordnet, welches ein Ein- bzw. Ausklappen des Gestängeabschnittes 7 erlaubt.

Wenn eine Bedienperson beispielsweise über den Bordcomputer 15 des Ackerschleppers 2 das Einklappen des Gestänges veranlasst, beginnt zunächst der äußere Gestängeabschnitt 8 einzuklappen. Dies ist in Fig. 5b dargestellt. Die Arbeitsstellung des entsprechenden motorischen Stellelements, welches das Klappen des äußeren Gestängeabschnittes 8 bewirkt, wird über ein Sensorelement erfasst. Ein entsprechendes Messsignal wird an eine hier nicht gezeigte Steuervorrichtung weitergeleitet. Das Sensorelement ist so ausgebildet, dass es eine oder mehrere Arbeitsstellungen des motorischen Stellelements zwischen den Endstellungen des Stellelementes erfasst und entsprechende Signale an das Steuerelement liefert.

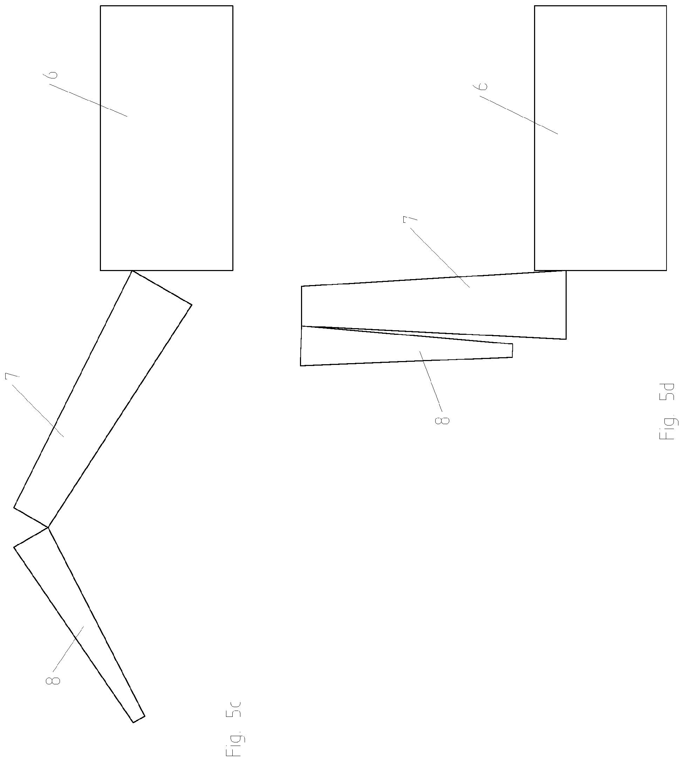

Sobald das motorische Stellelement eine vorherbestimmte Zwischenstellung erreicht hat, beispielsweise bei der das motorische Stellelement wenigstens 60 % seiner zum Klappen des Gestängeabschnittes 8 erforderlichen Bewegung bereits ausgeführt hat, so dass der Gestängeabschnitt 8 seine vollständig eingeklappte Position noch nicht erreicht hat, beginnt das zwischen den Gestängeabschnitten 6 und 7 angeordnete motorische Stellelement den Gestängeabschnitt 7 einzuklappen. Dies ist in Fig. 5c dargestellt.

Das Einklappen des Gestängeabschnittes 7 geschieht also bereits bevor der Gestängeabschnitt 8 vollständig eingeklappt wurde. Dadurch kann der Einklappvorgang insgesamt beschleunigt werden.

In Fig. 5d ist schließlich die vollständig eingeklappte Position der Gestängeabschnitte 7, 8 dargestellt.

Das Ausklappen der Gestängeabschnitte 7, 8 läuft in entsprechend umgekehrter Weise ab. Zunächst wird der innere Gestängeabschnitt 7 ausgeklappt. Noch bevor er seine vollständig ausgeklappte Position erreicht hat, beginnt das zwischen den Gestängeabschnitten 7 und 8 angeordnete motorische Stellelement den äußeren Gestängeabschnitt 8 auszuklappen. Die beiden Gestängeabschnitte werden also über einen gewissen Zeitraum gleichzeitig ausgeklappt, bis die vollständig ausgeklappte Position erreicht ist.

Die beschriebenen Sensorelemente können alternativ auch die Arbeitsstellung oder Klappstellung der Gestängeabschnitte 7, 8 bestimmen. Dafür können die Sensorelemente insbesondere im Bereich der Gelenke zwischen den Gestängeabschnitten angeordnet sein. Das Ein- bzw. Ausklappen wird dann entsprechend gesteuert, so dass das Klappen eines weiteren Gestängeabschnittes veranlasst wird, bevor der erste Gestängeabschnitt seine endgültige Klappposition erreicht hat.

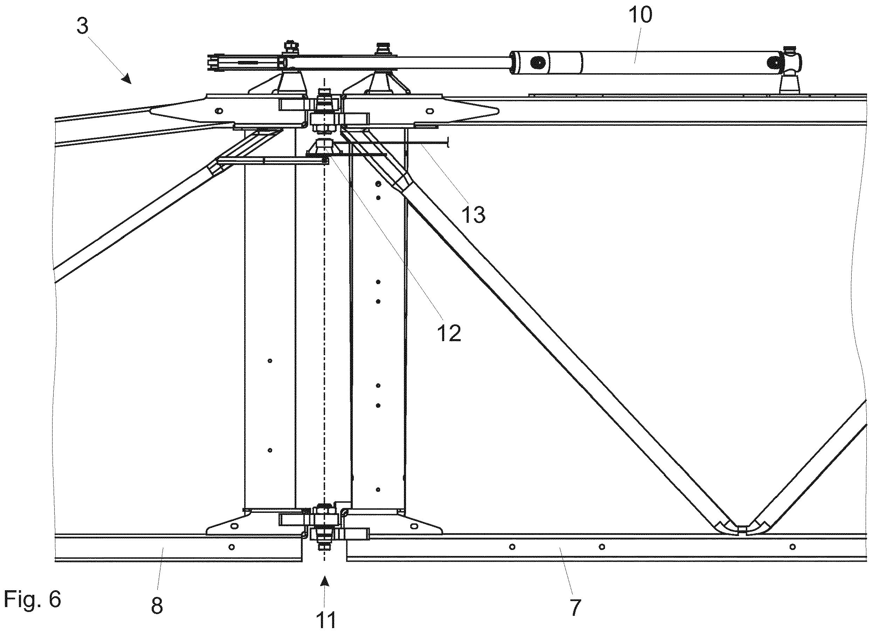

Diese alternative Lösung ist in Fig. 6 illustriert. Dort sind zwei Gestängeabschnitte 7, 8 gezeigt, die über ein vertikal verlaufendes Gelenk 11 miteinander verbunden sind. Ein als doppelwirkender Hydraulikzylinder ausgebildetes motorisches Stellelement 10 ist zum Klappen des äußeren Gestängeabschnittes 8 vorgesehen.

Im Gegensatz zu dem in Fig. 3 gezeigten Beispiel ist hier das Sensorelement 12 im Bereich des Gelenkes 11 vorgesehen. Außerdem wird über das Sensorelement 12 nicht die Arbeitsstellung des Hydraulikzylinders 10 erfasst, sondern die (Klapp-)Position des Gestängeabschnittes 8. Über die Datenleitung 13 übermittelt das Sensorelement 12 die jeweiligen Positionssignale an eine in der Fig. nicht gezeigte Steuervorrichtung.

Das Sensorelement kann in diesem Beispiel insbesondere als Drehpotentiometer ausgebildet sein, welches die jeweilige Winkelstellung des Gestängeabschnittes 8 in Bezug auf den Gestängeabschnitt 7 bestimmt.

Im Übrigen wird das Ein- bzw. Ausklappen dann wie oben dargelegt gesteuert, so dass das Klappen des zweiten Gestängeabschnittes 7 veranlasst wird, bevor der erste Gestängeabschnitt 8 seine endgültige Klappposition erreicht hat. Der Klappvorgang kann also wie in Fig. 5a - 5d gezeigt durchgeführt werden, nur dass anstelle der Arbeitsposition der motorischen Stellelemente die Klappposition der Gestängeabschnitte bestimmt wird.

Abschließend sei noch erwähnt, dass noch weitere Sensoren vorgesehen werden können, welche die Last der Stellelemente bestimmen, so dass bei Überlast auf ein Problem geschlossen und das Klappen gestoppt und/oder ein Alarm ausgegeben werden kann.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Gestänge (3) eines landwirtschaftlichen Gerätes (1) mit mehreren Gestängeabschnitten (7, 7', 8, 8', 9, 9'), die gelenkig miteinander verbunden und jeweils mittels eines zugehörigen motorischen Stellelementes (10, 21) in wenigstens zwei unterschiedliche Klappstellungen bringbar sind, wobei im Bereich der motorischen Stellelemente (10, 21) Sensorelemente (12) zur Erfassung der Arbeitsstellung des jeweiligen motorischen Stellelementes (10, 21) angeordnet sind, wobei die Sensorelemente (12) derart ausgebildet sind, dass sie Messsignale hinsichtlich der erfassten Arbeitsstellung erzeugen und an eine Steuervorrichtung (14) liefern, welche derart ausgebildet ist, dass sie in Abhängigkeit der gelieferten Messsignale die motorischen Stellelemente (10, 21) ansteuert,
wobei die Sensorelemente (12) derart ausgebildet sind, dass sie eine oder mehrere Arbeitsstellungen des jeweiligen motorischen Stellelementes (10, 21) zwischen den jeweiligen Endstellungen des Stellelementes (10, 21) erfassen können,
**dadurch gekennzeichnet, dass**
die Steuervorrichtung (14) derart ausgebildet ist, dass sie ein zweites motorisches Stellelement zum Klappen eines zweiten Gestängeabschnittes (7) bereits aktiviert, bevor ein erstes motorisches Stellelement zum Klappen eines ersten Gestängeabschnittes (8) eine seiner Endstellungen erreicht hat.

2. Gestänge (3) nach Anspruch 1, wobei die Steuervorrichtung (14) derart ausgebildet ist, dass sie das zweite motorische Stellelement aktiviert, wenn das erste motorische Stellelement eine vorherbestimmte Zwischenstellung erreicht hat.

3. Gestänge (3) nach Anspruch 2, wobei die vorherbestimmte Zwischenstellung einer Arbeitsstellung entspricht, bei der das erste motorische Stellelement wenigstens 50%, insbesondere wenigstens 60%, seiner zum Klappen des ersten Gestängeabschnittes (8) erforderlichen Bewegung bereits ausgeführt hat.

4. Gestänge (3) nach einem der vorangegangenen Ansprüche, wobei die Sensorelemente (12) als Potentiometer, insbesondere als Linearpotentiometer, ausgebildet sind.

5. Gestänge (3) nach einem der vorangegangenen Ansprüche, wobei die motorischen Stellelemente (10, 21) als Hydromotoren (10) oder als elektrische Stellmotoren (21) ausgebildet sind.

6. Gestänge (3) nach einem der vorangegangenen Ansprüche, wobei die Sensorelemente (12) den motorischen Stellelementen (10, 21) in integrierter Weise zugeordnet sind.

7. Verfahren zum Ein- und/oder Ausklappen eines Gestänges (3) eines landwirtschaftlichen Gerätes (1) mit mehreren Gestängeabschnitten (7, 7', 8, 8', 9, 9'), die gelenkig miteinander verbunden und jeweils mittels eines zugehörigen motorischen Stellelementes (10, 21) in wenigstens zwei unterschiedliche Klappstellungen bringbar sind, umfassend die Schritte:
Erfassen der Arbeitsstellung eines ersten motorischen Stellelementes durch ein im Bereich des ersten motorischen Stellelementes angeordnetes Sensorelement (12), wobei das erste motorische Stellelement zum Ein- und/oder Ausklappen eines ersten Gestängeabschnittes (8) vorgesehen ist;
Erzeugen eines Messsignals hinsichtlich der erfassten Arbeitsstellung und Übermitteln des Messsignals an eine Steuervorrichtung (14),
Ansteuern eines zweiten motorischen Stellelementes in Abhängigkeit des gelieferten Messsignals, wobei das zweite motorische Stellelement zum Ein- und/oder Ausklappen eines zweiten Gestängeabschnittes (7) vorgesehen ist; und
Erfassen einer oder mehrerer Arbeitsstellungen des ersten motorischen Stellelementes zwischen den jeweiligen Endstellungen des ersten Stellelementes,
**gekennzeichnet, durch**
Aktivieren des zweiten motorischen Stellelementes zum Klappen des zweiten Gestängeabschnittes (7), bevor das erste motorische Stellelement eine seiner Endstellungen erreicht hat.

8. Gestänge (3) eines landwirtschaftlichen Gerätes (1) mit mehreren Gestängeabschnitten (7, 7', 8, 8', 9, 9'), die gelenkig miteinander verbunden und jeweils mittels eines zugehörigen motorischen Stellelementes (10, 21) in wenigstens zwei unterschiedliche Klappstellungen bringbar sind, wobei im Bereich der Gelenke (11) zwischen den Gestängeabschnitten (7, 7', 8, 8', 9, 9') Sensorelemente (12) zur Erfassung der Position der jeweiligen Gestängeabschnitte (7, 7', 8, 8', 9, 9') angeordnet sind, wobei die Sensorelemente (12) derart ausgebildet sind, dass sie Messsignale hinsichtlich der erfassten Position erzeugen und an eine Steuervorrichtung (14) liefern, welche derart ausgebildet ist, dass sie in Abhängigkeit der gelieferten Messsignale die motorischen Stellelemente (10, 21) ansteuert,
wobei die Sensorelemente (12) derart ausgebildet sind, dass sie eine oder mehrere Positionen zwischen den jeweiligen Endstellungen der Gestängeabschnitte (7, 7', 8, 8', 9, 9') erfassen können,
**dadurch gekennzeichnet, dass**
die Steuervorrichtung (14) derart ausgebildet ist, dass sie ein zweites motorisches Stellelement zum Klappen eines zweiten Gestängeabschnittes (7) bereits aktiviert, bevor ein erster Gestängeabschnitt (8), der ein- oder ausgeklappt wird, eine seiner Endstellungen erreicht hat.

9. Verfahren zum Ein- und/oder Ausklappen eines Gestänges (3) eines landwirtschaftlichen Gerätes (1) mit mehreren Gestängeabschnitten (7, 7', 8, 8', 9, 9'), die gelenkig miteinander verbunden und jeweils mittels eines zugehörigen motorischen Stellelementes (10, 21) in wenigstens zwei unterschiedliche Klappstellungen bringbar sind, umfassend die Schritte:
Erfassen der Position eines ersten Gestängeabschnittes (8) durch ein im Bereich des ersten Gestängeabschnittes (8) angeordnetes Sensorelement (12);
Erzeugen eines Messsignals hinsichtlich der erfassten Position und Übermitteln des Messsignals an eine Steuervorrichtung (14),
Ansteuern eines motorischen Stellelementes (10, 21) in Abhängigkeit des gelieferten Messsignals, wobei das motorische Stellelement (10, 21) zum Ein- und/oder Ausklappen eines zweiten Gestängeabschnittes (7) vorgesehen ist; und
Erfassen einer oder mehrerer Positionen des ersten Gestängeabschnittes (8) zwischen den jeweiligen Endstellungen des ersten Gestängeabschnittes (8),
**gekennzeichnet, durch**
Aktivieren des motorischen Stellelementes (10, 21) zum Klappen des zweiten Gestängeabschnittes (7), bevor der erste Gestängeabschnitt (8) eine seiner Endstellungen erreicht hat.

## Claims

1. Linkage (3) of an agricultural device (1) having a plurality of linkage sections (7, 7', 8, 8', 9, 9') which are connected to one another in an articulated fashion and can each be placed in at least two different folded positions by means of an associated motor-operated actuator element (10, 21), wherein sensor elements (12) for detecting the working position of the respective motor-operated actuator element (10, 21) are arranged in the region of the motor-operated actuator elements (10, 21), wherein the sensor elements (12) are embodied in such a way that they generate measurement signals relating to the detected working position and supply them to a control device (14), which is embodied in such a way that it actuates the motor-operated actuator elements (10, 21) as a function of the supplied measurement signals,
wherein the sensor elements (12) are embodied in such a way that they can detect one or more working positions of the respective motor-operated actuator element (10, 21) between the respective end positions of the actuator element (10, 21),
**characterized in that**
the control device (14) is embodied in such a way that it already activates a second motor-operated actuator element for folding a second linkage section (7) before a first motor-operated actuator element for folding a first linkage section (8) has reached one of its end positions.

2. Linkage (3) according to Claim 1, wherein the control device (14) is embodied in such a way that it activates the second motor-operated actuator element when the first motor-operated actuator element has reached a predetermined intermediate position.

3. Linkage (3) according to Claim 2, wherein the predetermined intermediate position corresponds to a working position in which the first motor-operated actuator element has already carried out at least 50%, in particular at least 60%, of its movement which is necessary to fold the first linkage section (8).

4. Linkage (3) according to one of the preceding claims, wherein the sensor elements (12) are embodied as potentiometers, in particular as linear potentiometers.

5. Linkage (3) according to one of the preceding claims, wherein the motor-operated actuator elements (10, 21) are embodied as hydraulic motors (10) or as electric servomotors (21).

6. Linkage (3) according to one of the preceding claims, wherein the sensor elements (12) are assigned to the motor-operated actuator elements (10, 21) in an integrated fashion.

7. Method for folding in and/or out a linkage (3) of an agricultural device (1) having a plurality of linkage sections (7, 7', 8, 8', 9, 9') which are connected to one another in an articulated fashion and can each be placed in at least two different folded positions by means of an associated motor-operated actuator element (10, 21), comprising the following steps:
detecting the working position of a first motor-operated actuator element by means of a sensor element (12) which is arranged in the region of the first motor-operated actuator element, wherein the first motor-operated actuator element is provided for folding in and/or out a first linkage section (8);
generating a measurement signal relating to the detected working position and transmitting the measurement signal to a control device (14);
actuating a second motor-operated actuator element as a function of the supplied measurement signal, wherein the second motor-operated actuator element is provided for folding in and/or out a second linkage section (7); and
detecting one or more working positions of the first motor-operated actuator element between the respective end positions of the first actuator element,
**characterized by**
activating the second motor-operated actuator element for folding the second linkage section (7) before the first motor-operated actuator element has reached one of its end positions.

8. Linkage (3) of an agricultural device (1) having a plurality of linkage sections (7, 7', 8, 8', 9, 9') which are connected to one another in an articulated fashion and can each be placed in at least two different folded positions by means of an associated motor-operated actuator element (10, 21), wherein sensor elements (12) for detecting the position of the respective linkage sections (7, 7', 8, 8', 9, 9') are arranged in the region of the joints (11) between the linkage sections (7, 7', 8, 8', 9, 9'), wherein the sensor elements (12) are embodied in such a way that they generate measurement signals relating to the detected position and supply them to a control device (14), which is embodied in such a way that it actuates the motor-operated actuator elements (10, 21) as a function of the supplied measurement signals,
wherein the sensor elements (12) are embodied in such a way that they can detect one or more positions between the respective end positions of the linkage sections (( 7', 8, 8', 9, 9'),
**characterized in that**
the control device (14) is embodied in such a way that it already activates a second motor-operated actuator element for folding a second linkage section (7) before a first linkage section (8) which is being folded in or out has reached one of its end positions.

9. Method for folding in and/or out a linkage (3) of an agricultural device (1) having a plurality of linkage sections (7, 7', 8, 8', 9, 9') which are connected to one another in an articulated fashion and can each be placed in at least two different folded positions by means of an associated motor-operated actuator element (10, 21), comprising the following steps:
detecting the position of the first linkage section (8) by means of a sensor element (12) which is arranged in the region of the first linkage section (8);
generating a measurement signal relating to the detected position and transmitting the measurement signal to a control device (14);
actuating a motor-operated actuator element (10, 21) as a function of the supplied measurement signal, wherein the motor-operated actuator element (10, 21) is provided for folding in and/or out a second linkage section (7); and
detecting one or more positions of the first linkage section (8) between the respective end positions of the first linkage section (8),
**characterized by**
activating the motor-operated actuator element (10, 21) for folding the second linkage section (7) before the first linkage section (8) has reached one of its end positions.

## Revendications

1. Rampe (3) d'un engin agricole (1) avec plusieurs sections de rampe (7, 7', 8, 8', 9, 9') reliées entre elles de façon articulée et pouvant respectivement être amenées dans au moins deux positions rabattues différentes à l'aide d'un élément de réglage motorisé (10, 21) associé, des éléments de détection (12) étant disposés dans la zone des éléments de réglage motorisés (10, 21) pour détecter la position de travail de l'élément de réglage motorisé (10, 21) respectif, les éléments de détection (12) étant réalisés de telle sorte qu'ils émettent des signaux de mesure par rapport à position de travail détectée et les envoient à un dispositif de commande (14) réalisé de façon à exciter les éléments de réglage motorisés (10, 21) en fonction des signaux de mesure fournis ;
les éléments de détection (12) étant réalisés de telle sorte qu'ils peuvent détecter une ou plusieurs positions de travail de l'élément de réglage motorisé (10, 21) respectif entre les positions d'extrémité respectives de l'élément de réglage (10, 21) ;
**caractérisée en ce que** :
le dispositif de commande (14) est réalisé de telle sorte qu'il active déjà un deuxième élément de réglage motorisé prévu pour le rabattement d'une deuxième section de rampe (7) avant qu'un premier élément de réglage motorisé ait atteint une de ses positions d'extrémité pour le rabattement d'une première section de rampe (8).

2. Rampe (3) selon la revendication 1, le dispositif de commande (14) étant réalisé de telle sorte qu'il active le deuxième élément de réglage motorisé lorsque le premier élément de réglage motorisé a atteint une position intermédiaire prédéfinie.

3. Rampe (3) selon la revendication 2, la position intermédiaire prédéfinie correspondant à une position de travail dans laquelle le premier élément de réglage motorisé a déjà réalisé au moins 50 %, notamment au moins 60 %, de son mouvement nécessaire pour le rabattement de la première section de rampe (8).

4. Rampe (3) selon l'une quelconque des revendications précédentes, les éléments de détection (12) étant réalisés sous la forme de potentiomètres, notamment de potentiomètres linéaires.

5. Rampe (3) selon l'une quelconque des revendications précédentes, les éléments de réglage motorisés (10, 21) étant réalisés sous la forme de moteurs hydrauliques (10) ou de servomoteurs électriques (21).

6. Rampe (3) selon l'une quelconque des revendications précédentes, les éléments de détection (12) étant associés aux éléments de réglage motorisés (10, 21) de façon intégrée.

7. Procédé de repli et/ou déploiement d'une rampe (3) d'engin agricole (1) avec plusieurs sections de rampe (7, 7', 8, 8', 9, 9') reliées entre elles de façon articulée et pouvant respectivement être amenées dans au moins deux positions rabattues différentes à l'aide d'un élément de réglage motorisé (10, 21) associé, comprenant les étapes suivantes :
détection de la position de travail d'un premier élément de réglage motorisé au travers d'un élément de détection (12) disposé dans la zone du premier élément de réglage motorisé, le premier élément de réglage motorisé étant prévu pour le repli et/ou déploiement d'une première section de rampe (8) ;
émission d'un signal de mesure par rapport à la position de travail détectée et envoi du signal de mesure à un dispositif de commande (14) ;
excitation d'un deuxième élément de réglage motorisé en fonction du signal de mesure fourni, le deuxième élément de réglage motorisé étant prévu pour le repli et/ou déploiement d'une deuxième section de rampe (7) ; et
détection d'une ou plusieurs positions de travail du premier élément de réglage motorisé entre les positions d'extrémité respectives du premier élément de réglage ; **caractérisé par** :
l'activation du deuxième élément de réglage motorisé pour le rabattement de la deuxième section de rampe (7) avant que le premier élément de réglage motorisé ait atteint une de ses positions d'extrémité.

8. Rampe (3) d'un engin agricole (1) avec plusieurs sections de rampe (7, 7', 8, 8', 9, 9') reliées entre elles de façon articulée et pouvant respectivement être amenées dans au moins deux positions rabattues différentes à l'aide d'un élément de réglage motorisé (10, 21) associé, les éléments de détection (12) étant disposés dans la zone des articulations (11) entre les sections de rampe (7, 7', 8, 8', 9, 9') pour détecter la position des sections de rampe (7, 7', 8, 8', 9, 9') respectives, les éléments de détection (12) étant réalisés de telle sorte qu'ils émettent des signaux de mesure par rapport à la position détectée et les envoient à un dispositif de commande (14) réalisé de façon à exciter les éléments de réglage motorisés (10, 21) en fonction des signaux de mesure reçus ;
les éléments de détection (12) étant réalisés de façon à pouvoir détecter une ou plusieurs positions entre les positions d'extrémité respectives des sections de rampe (7, 7', 8, 8', 9, 9') ;
**caractérisée en ce que** :
le dispositif de commande (14) est réalisé de telle sorte qu'il active déjà un deuxième élément de réglage motorisé prévu pour rabattre une deuxième section de rampe (7) avant qu'une première section de rampe (8) repliée ou déployée n'atteigne une de ses positions d'extrémité.

9. Procédé de repli et/ou déploiement d'une rampe (3) d'engin agricole (1) avec plusieurs sections de rampe (7, 7', 8, 8', 9, 9') reliées entre elles de façon articulée et pouvant respectivement être amenées dans au moins deux positions rabattues différentes à l'aide d'un élément de réglage motorisé (10, 21) associé, comprenant les étapes suivantes :
détection de la position d'une première section de rampe (8) au travers d'un élément de détection (12) disposé dans la zone de la première section de rampe (8) ;
émission d'un signal de mesure par rapport à la position détectée et envoi du signal de mesure à un dispositif de commande (14) ;
excitation d'un élément de réglage motorisé (10, 21) en fonction du signal de mesure reçu, l'élément de réglage motorisé (10, 21) étant prévu pour le repli et/ou déploiement d'une deuxième section de rampe (7) ; et
détection d'une ou plusieurs positions de la première section de rampe (8) entre les positions d'extrémité respectives de la première section de rampe (8) ;
**caractérisé par** :
l'activation de l'élément de réglage motorisé (10, 21) prévu pour le rabattement de la deuxième section de rampe (7) avant que la première section de rampe (8) ait atteint une de ses positions d'extrémité.
